# EUROPÄISCHE PATENTSCHRIFT

(11) **EP 2 480 464 B1**
(45) Veröffentlichungstag und Bekanntmachung des Hinweises auf die Patenterteilung: **05.08.2015**
(21) Anmeldenummer: 10760981.0
(22) Anmeldetag: 22.09.2010
(51) Int. Cl.: B65D 41/04, B65D 53/04, B32B 7/06

(54) **INDUKTIONSSIEGELSCHEIBE**
INDUCTION SEAL DISK
RONDELLE DE SCELLAGE PAR INDUCTION

(30) Priorität: 23.09.2009 EP 09171085
(43) Veröffentlichungstag der Anmeldung: 01.08.2012
(73) Patentinhaber: Boehringer Ingelheim International GmbH, 55216 Ingelheim am Rhein (DE)
(72) Erfinder: BALTHES, Eduard, 55216 Ingelheim am Rhein (DE)
(74) Vertreter: Simon, Elke Anna Maria
(86) Internationale Anmeldenummer: PCT/EP2010/063973
(87) Internationale Veröffentlichungsnummer: WO 2011/036176

(56) Entgegenhaltungen:
- US-A- 4 917 949
- US-A1- 2006 124 574
- US-A1- 2006 124 577

## Beschreibung

Die Erfindung bezieht sich auf eine Induktionssiegelscheibe für einen Verschluss einer Flasche zur Aufbewahrung von Arzneimitteln, umfassend eine Pappeinlage und eine insbesondere metallische Siegelfolie, einen Verschluss mit einer Induktionssiegelscheibe und eine Kunststoffflasche mit einem entsprechenden Verschluss.

Im Bereich der pharmazeutischen Industrie werden pharmazeutische Wirkstoffformulierungen als Tabletten, Dragees oder befüllte Kapseln in verschlossenen Flaschen aus Glas- oder Kunststoff verpackt vertrieben. Zwischen dem freien Ende des Flaschenhalses und dem Verschluss ist in der Regel eine Induktionssiegelscheibe angeordnet, die zum einen als Originalitätsverschluss dient und zum anderen ein Eindringen von Feuchtigkeit in die Flasche verhindert. Induktionssiegelscheiben sind in den verschiedensten Variationen bekannt und werden separat hergestellt. Vor dem Verschließen der befüllten Flasche wird eine Induktionssiegelscheibe in einen entsprechenden Verschluss eingelegt, der in der Regel mit einem bestimmten Drehmoment auf die Flasche aufgeschraubt wird. Anschließend durchläuft die verschlossene Flasche eine Induktionseinrichtung, in der das eigentliche Versiegeln erfolgt, wobei in eine metallische Folie der Induktionssiegelscheibe Wechselstrom induziert und in Wärme umgewandelt wird, die entweder eine direkte Verbindung der metallischen Folie mit einem Flaschenhals aus Kunststoff oder ein Schmelzen eines entsprechenden Klebstoffes bewirkt, durch den die Folie an dem Flaschenhals befestigt wird. Auf der dem Flaschenhals abgewandten Seite der Folie ist eine elastische Druckeinlage angeordnet, die durch den Klemmdruck des Verschlusses ein einwandfreies Andrücken der Folie bzw. Siegelschicht ermöglicht. Oftmals ist die Druckeinlage durch Wachs oder einen anderen Kleber mit der Folie verbunden. Beim Versiegeln verflüssigt sich das Wachs bzw. der Kleber aufgrund der Erwärmung und diffundiert in die entsprechend gestaltete Druckeinlage oder es werden spezielle Papierschichten vorgesehen, die das Wachs bzw. den Kleber aufnehmen.

Einer der bestimmenden Faktoren bei der Stabilität von pharmazeutischen Wirkstoffen ist Feuchtigkeit. Im Hinblick auf die zunehmende Entwicklung immer wirksamerer aber gleichzeitig gegenüber Feuchtigkeit immer empfindlicherer Wirkstoffe ist eine Reduktion sowie Kontrolle der Feuchtigkeit in Verpackungen notwendig. Bei der Verpackung von Arzneimitteln spielen Kunststoffflaschen eine große Rolle, die für die Lieferkette von einem Hersteller bzw. Abfüller bis zu einer Apotheke bzw. zu einem Patienten mit der Induktionsversiegelung verschlossen ist, wodurch die Kunststoffflaschen während der Lieferung und Lagerung besonders dicht gegenüber Feuchtigkeit sind. Überraschenderweise hat sich herausgestellt, dass ausgerechnet diese besonders hochwertige Verschlusstechnik dazu führt, dass induktionsgesiegelte Kunststoffflaschen nach ihrem Anbruch im Bereich der Öffnung besonders undicht sind (so genannte In-Use-Permeation). Beim Anbruch der Flasche wird die Siegelfolie durchstoßen und lediglich eine Pappschicht und der fest verschraubte Kunststoffverschluss schützen das Produkt vor Feuchtigkeit.

Es ist Aufgabe der Erfindung, eine Induktionssiegelscheibe der eingangs genannten Art zu schaffen, die auch nach dem Aufbruch des Induktionssiegels eine große Dichtigkeit gegen Feuchtigkeit aufweist. Dokument 2006/0124574 offenbart eine Induktionssiegelscheibe nach dem Oberbegriff des Anspruchs 1.

Erfindungsgemäß wird die Aufgabe durch die Merkmale des Anspruchs 1 gelöst.

Zur Verringerung der In-Use-Permeation wird in die dem Verschluss zugeordnete Induktionssiegelscheibe eine zusätzliche Barriere in Form der Folie eingebracht, die mit der Druckeinlage vorzugsweise fest verklebt wird. Die Siegelfolie wird beim Induktionssiegeln mit einem Flaschenhals fest verbunden und sichert die niedrige Permeationsrate bei der Lagerung der derart verschlossenen Flasche. Die Siegelfolie kann durch eine, insbesondere durch Wärme lösbare, Klebeoder Haftschicht mit der Folie verbunden sein, so dass nach dem Siegelprozess ein Verdrehen der Folie gegenüber der Siegelfolie ohne eine Zerstörung der Siegelfolie möglich ist. Nach Anbruch der Flasche, also nach dem Durchstoßen der Siegelfolie, wird die Wasserpermeation über den Hauptpermeationsweg, nämlich über die Druckeinlage sowie den Werkstoff, aus dem der Verschluss gefertigt ist, durch die zusätzlich eingelegte Folie vollständig blockiert. Diese Methode zur Verbesserung der In-Use-Permeation ist nicht auf einen bestimmten Flaschen- oder Behältertyp beschränkt und es können unterschiedliche Materialien, insbesondere Aluminium-Verbundstoffe und/oder Polymere, beispielsweise Polypropylen, verwendet werden. Auch eine Verwendung der Induktionssiegelscheibe bei Behältern bzw. Flaschen aus anderen Materialien als Kunststoffen ist realisierbar. Im Weiteren ist die Induktionssiegelscheibe bei allen gängigen Deckeltypen verwendbar, insbesondere bei kindersicheren oder seniorenfreundlichen Verschlüssen.

In Ausgestaltung ist die Folie mit der als Pappeinlage ausgebildeten Druckeinlage verklebt und zwischen der Folie und der Siegelfolie ist eine Haftschicht aufgetragen. Demnach herrscht eine feste Verbindung zwischen der Pappeinlage und der Folie und eine lösbare Haftverbindung zwischen der Folie und der Siegelfolie.

Zweckmäßigerweise bestehen die Siegelfolie und die Folie aus Aluminium. Andere metallische Werkstoffe oder Laminate aus Metall und/oder Kunststofffolien sind jedoch nicht ausgeschlossen und werden von dem Fachmann in Abhängigkeit ihrer Anforderungen ausgewählt.

Um eine zuverlässige Barriere zur Reduzierung der Wasserpermeation bereitzustellen, weisen vorteilhafterweise die Fläche der Pappeinlage, der Folie und der Siegelfolie jeweils die gleiche Größe auf. Die Größe ist auf den Innendurchmesser des Verschlusses sowie auf die zu siegelnde Auflagefläche des zu verschließenden Behälters angepasst, um ein großflächiges Verschließen zu ermöglichen.

Die noch verbleibende Differenz zwischen der Permeation des angebrochenen und des gesiegelten Behälters ist auf die laterale Permeation durch die Haftschicht zwischen der Folie und der Siegelfolie zurückzuführen. Die Permeation wird dadurch weiter reduziert, dass zwischen der Folie und der Siegelfolie eine Haftschicht vorgesehen ist, deren Fläche geringer als die Fläche der Siegelfolie bemessen ist, wobei sich die Haftschicht nicht bis zum Rand der Siegelfolie erstreckt. Der Durchmesser der kreisförmig aufgebrachten Haftschicht zwischen der Folie und der Siegelfolie ist derart bemessen, dass die Haftschicht die Flaschendichtfläche (-Oberkante) nicht berührt. Nach Anbruch der Flasche kann demnach die Haftschicht selbst nicht zur seitlichen Permeation zwischen den der Folie und der Siegelfolie beitragen.

Vorzugsweise besteht die Haftschicht aus einem Wachs, insbesondere mit einer geringen Permeabilität. Das Wachs schmilzt beim Siegeln und ermöglicht anschließend ein zerstörungsfreies Verdrehen der Folie gegenüber der Siegelfolie beim Aufschrauben und Verschließen des Deckels. Um die Permeation durch die Wachsschicht zwischen der Folie und der Siegelfolie zu reduzieren, wird als Wachs ein funktionelles Material gewählt, das nicht nur durch seine Gleiteigenschaften das zerstörungsfreie Öffnen des Verschlusses ermöglicht, sondern darüber hinaus eine sehr geringe Permeation aufweist und zusätzlich beispielsweise aufgrund hoher Haftungseigenschaften, einer geringen Riefen- und Klumpenbildung sowie elastischer Eigenschaften den Wassereintrag minimiert.

Eine alternative Ausgestaltung die nicht Teil der Erfindung ist, umfasst das Weglassen der Haftschicht zwischen der Folie und der Siegelfolie. Hierbei ist bevorzugt die Siegelfolie oder der Verschluss derart bemessen, dass die Siegelfolie im ungesiegelten Zustand in dem Verschluss gehalten ist. Als Siegelfolie wird eine hinreichend stabile Folie verwendet, deren Herausfallen aus dem Verschluss beim Verpackungsprozess dadurch verhindert werden kann, dass der lichte Durchmesser des Verschlusses am Sitz der Induktionssiegelscheibe etwas größer ist als der Innendurchmesser des Verschlusses, der durch das Gewinde frei gelassen wird. Die in den Verschluss eingebrachte Siegelfolie kann sonach im Verpackungsprozess vor dem Siegeln nicht herausfallen. Um die lagerichtige Anordnung von Folie und Siegelfolie sicherzustellen ist es möglich, die Folie und die Siegelfolie optisch erfassbar unterschiedlich zu gestalten, beispielsweise durch das Aufbringen von Strukturen, Aufdrucken und/oder Farben. Somit ist auch eine optische Kontrolle möglich, ob sowohl die Folie als auch die Siegelfolie während der Verpackung in dem Verschluss vorhanden sind.

Nach einer Weiterbildung sind die Folie und/oder die Siegelfolie beschichtet, insbesondere mit einem Lack oder einem Kunststoff, beispielsweise Polyolefin, Polyethylen, Polypropylen, Ethylenvinylalcohol, Ethylenvinylacetat, oder einer Barrierefolie, beispielsweise Cycloolefincopolymer, hochkritsallines Polyvinylidenchlorid, Polychlortrifluorethylen. Die Beschichtung kann dazu dienen, metallischen Abrieb beim wiederholten Öffnen und Schließen des Verschlusses zu verhindern und damit das Produkt in dem Behälter bzw. der Flasche zu schützen. Darüber hinaus kann eine Beschichtung sowohl in ihrem Material bzw. ihren Materialkombinationen und ihrer Dicke auch derart gewählt werden, dass das direkte Anliegen der Folie und der Siegelfolie aufeinander gesichert ist bzw. Unebenheiten ausgeglichen werden und damit die seitliche Permeation weitergehend verringert ist. Als Beschichtungen können beispielsweise Lacke, einfache Polymere, beispielsweise Polyolefine wie Polyethylen hoher oder niedriger Dichte (HDPE bzw. LDPE), Polypropylen (PP), oder Barrierefolien, wie z.B. Cycloolefincopolymer(COC), hochkristallines Polyvinylidenchlorid (PVDC), Polychlortrifluorethylen (PCTFE = Aclar ®) verwendet werden. In weiteren Varianten können Barriereeigenschaften gegen Wasser z.B. mit Barriereeigenschaften gegen Gase, z.B. Sauerstoff, kombiniert werden. Dazu können zur Beschichtung insbesondere der Folie geeignete Barrierekunststoffe, wie z.B. hochkristallines Polyvinylidenchlorid (PVDC) oder Ethylenvinylalkohol (EVOH) verwendet werden. Darüber hinaus kann die Beschichtung gezielt als Aromaschutz gewählt werden, indem dafür geeignete Barrierekunststoffe, wie z.B. PVDC (für Wasser- ünd gleichzeitigen Aromaschutz) oder Ethylenvinylacetat (EVA, vorwiegend für Aromaschutz) gezielt eingesetzt werden. Zum gleichzeitigen Erreichen einer Barrierewirkung gegenüber verschiedenen Stoffen, z.B. Wasser und Gasen und Aromen, etc., können Folienverbunde mit den entsprechenden Barriereeigenschaften eingesetzt werden. Der Einsatz von Folienverbunden kann auch zur Verbesserung der mechanischen Stabilität der Folie und/oder der Siegelfolie erfolgen. Zum Zweck der Verbesserung der seitlichen Permeation kann auch die Folie ganz oder teilweise z.B. durch Beschuss oder Bedampfung beschichtet und/oder physikalisch verändert werden. Zu diesem Zweck können auch die Beschichtungen/Beläge oberflächenbehandelt bzw. physikalisch verändert werden. In einer weiteren Variante kann die Folie durch eine aluminiumfreie Barrierefolie bzw. durch einen Folienverbund ersetzt sein. Dieser kann selbst beschichtet, vorbehandelt, oder physikalisch verändert sein.

Zur weitergehenden Verbesserung der In-Use-Permeationseigenschaften umfasst bevorzugt die Beschichtung ein Sorbens, das insbesondere zur Sorption von Wasser, Gasen und/oder Aromastoffen geeignet ist. Hierbei kann es sich z.B. um Silicägel, ein Molekularsieb, Ton oder Gips handeln.

Die Aufgabe wird auch mit einem Verschluss für eine Flasche zur Aufbewahrung von Arzneimitteln mit einer Induktionssiegelscheibe mit den zuvor erläuterten Eigenschaften gelöst.

Um ein mehrfaches und zuverlässiges Öffnen und Schließen zu gewährleisten, ist zweckmäßigerweise der Verschluss als Schraubverschluss ausgebildet. Mit dem Schraubverschluss ist relativ einfach eine zur zuverlässigen Abdichtung benötigte Flächenpressung zu erzielen.

Im Weiteren wird die Aufgabe mit einer Kunststoffflasche mit einem oben dargestellten Verschluss gelöst.

Eine derartige Kunststoffflasche ist insbesondere im Blasverfahren, auch in Koextrusion mehrerer Materialschichten, kostengünstig herstellbar. Von besonderem Vorteil ist es, wenn die Kunststoffflasche aus einem Polyurethan-Elastomer, einem zelligen Polyurethan-Elastomer, einem thermoplastischen Werkstoff, insbesondere aus Polypropylen oder Polyethylen hoher/niedriger Dichte, oder einem Laminat besteht. Für die Kunststoffflasche können Kunststoffe aus Polyvinylchlorid (PVC), Cyclo-Olefin-Copolymer (COC), Polychlortrifluorethylen (PCFE), Polyethylen (PE), Polypropylen (PP), Polyethylenterephthalat (PET), Polycarbonat (PC), Polyester (UP), Polyacrylat, Polyamid (PA) oder einem anderen Kunststoff oder einem mehrschichtigen Kunststoffverbund, beispielsweise bestehend aus einer Kombination von Polychlortrifluorethylen (PCTFE), das insbesondere unter dem für die Honeywell International, Inc. geschützten Handelsnamen Aclar® bekannt ist, mit Polyvinylchlorid (PVC) oder Polyvinylchlorid (PVC) mit Polyvinylidenchlorid (PVdC) gefertigt ist.

Vorzugsweise ist an dem freien Ende des Flaschenhalses eine Dichtfläche ausgebildet. Die Dichtfläche ist derart gestaltet, dass eine relativ große und ebene Auflagefläche für die Siegelfolie und/oder die Folie bereitgestellt ist.

In weiterer Ausgestaltung ist die Kunststoffflasche mit einer pharmazeutischen Wirkstoffformulierung in Form von Tabletten, Dragees oder befüllten Kapseln befüllt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:
- Fig.1: eine Kunststoffflasche mit einem Verschluss und einer Induktionssiegelscheibe nach dem Stand der Technik und
- Fig.2: eine Kunststoffflasche mit einem Verschluss und einer Induktionssiegelscheibe nach der Erfindung.

Die Kunststoffflasche 1 nach dem Stand der Technik ist aus einem Polyethylen hoher Dichte (HDPE) gefertigt und weist einen Inhalt von ca. 150 ml auf. An ihren Flaschenhals 2 ist ein Gewinde 3 für einen Verschluss 4 ausgeformt. In den Verschluss 4 ist eine Induktionssiegelscheibe 5 eingelegt, die aus einer Pappeinlage 6 besteht, auf der mit einem Wachs 7 eine Siegelfolie 8 aus Aluminium befestigt ist.

Nach dem Befüllen wird die Kunststoffflasche 1 mit dem Verschluss 4 mit darin aufgenommener Induktionssiegelscheibe 5 mit einem bestimmten Drehmoment verschlossen, um die Pappeinlage 6 mit der darauf geklebten Siegelfolie 8 mit dem entsprechenden Anpressdruck auf das freie Ende des Flaschenhalses 2 zu pressen. Anschließend durchläuft die verschlossene Kunststoffflasche 1 ein dicht über dem Verschluss 4 eingestrahltes elektromagnetisches Feld einer bestimmten Leistung, wodurch in der elektrisch leitfähigen Siegelfolie 8 ein elektrischer Strom induziert wird, der aufgrund des elektrischen Widerstandes von Aluminium dissipiert, d.h. unmittelbar in Wärme umgesetzt wird. Durch die entstehende Wärme schmilzt die Kontaktfläche am freien Ende des Flaschenhalses 2 und verklebt den Flaschenhals 2 mit der Siegelfolie 8. Nach dem Austritt aus einer Siegelmaschine erkaltet der erwärmte Bereich und die Siegelfolie 8 ist mit der Kunststoffflasche 1 verschweißt. Während des Erhitzens beim Siegeln schmilzt neben dem Kunststoff gleichzeitig das Wachs 7 zwischen der Pappeinlage 6 und der Siegelfolie 8, wonach die Pappeinlage 6 von der Siegelfolie 8 gelöst ist. Dieses Induktionssiegelverfahren wird bereits seit Jahren erfolgreich bei der Verpackung pharmazeutischer Produkte angewandt. Nach diesem Verfahren gesiegelte HDPE-Flaschen weisen im versiegelten Zustand geringe Permeationsraten von ca. beispielsweise 0,85 mg Wasser pro Tag auf, bei einer 150 ml-HDPE-Flasche, bezogen auf 100%[relative Feuchte] Feuchtedifferenz (innen-außen) und 25°C. Beim Anbruch der Kunststofffläsche 1 wird die Siegelfolie 8 durchstoßen. Danach schützen die dichtend auf das freie Ende des Flaschenhalses 2 gepresste Pappeinlage 6 und der fest verschraubte Verschluss 4 das Produkt in der Kunststoffflasche 1 vor Feuchtigkeit und die Permeationsrate beträgt ca. 7,3 mg Wasser pro Tag unter den zuvor genannten Bedingungen.

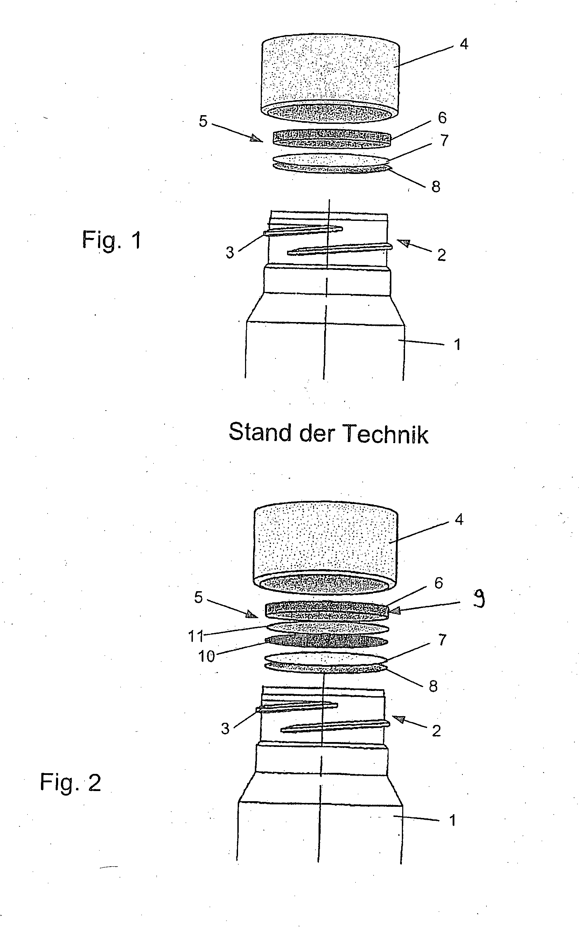

Bei der erfindungsgemäßen Kunststoffflasche 1 nach Fig. 2 ist die Induktionssiegelscheibe 5 dahingehend verbessert, dass zwischen einer Druckeinlage 9, die beispielsweise auch aus einem elastischen Kunststoff gefertigt sein kann, und der Siegelfolie 8 eine Folie 10 mit einer geringen Permeabilität angeordnet ist, wobei die aus Aluminium bestehende Folie 10 mit der als Pappeinlage 6 ausgebildeten Druckeinlage 9 unter Verwendung eines Klebstoffes 11 fest verklebt ist. Auf der Folie 10 ist mit Wachs 7 die ebenfalls aus Aluminium gefertigte Siegelfolie 8 befestigt. Die Pappeinlage 6, die Folie 10 und die Siegelfolie 8 weisen jeweils die gleiche Größe auf.

Um die laterale Permeation durch die Schicht von Wachs 7 zwischen der Folie 10 und der Siegelfolie 8 zu verringern, wird als Wachs 7 selbst ein funktionelles Material gewählt, das durch seine Gleiteigenschaften das zerstörungsfreie Öffnen des Verschlusses 4 sichert und darüber hinaus eine geringe Permeabilität aufweist. Um die seitliche Permeation über das Wachs 7 weitergehend zu reduzieren, ist der Durchmesser der kreisförmig aufgebrachten Schicht des Wachses 7 zwischen der Folie 10 und der Siegelfolie 8 so klein, dass das Wachs 7 die Dichtfläche am freien Ende des Flaschenhalses 2 nicht berühren kann. Nach Anbruch der Kunststoffflasche 1 kann damit das Wachs 7 selbst nicht zur seitlichen Permeation zwischen der Folien 10 und der Siegelfolie 8 beitragen.

Beim Siegeln wird die Siegelfolie 8 mit dem Flaschenhals 2 fest verschweißt und sichert, wie bisher, die niedrige Permeationsrate bei der Lagerung der gesiegelten Kunststoffflasche 1. Das Wachs 7 zwischen der Folie 10 und der Siegelfolie 8 schmilzt beim Siegeln aufgrund der herrschenden Wärme und ermöglicht ein zerstörungsfreies Verdrehen der Folie 10 gegenüber der Siegelfolie 8 beim Öffnen und Verschließen des Verschlusses 4. Damit bleiben die Folie 10 und die Siegelfolie 8 intakt und behalten ihre Barriereeigenschaft. Nach Anbruch der Kunststoffflasche 1 mit dem damit einhergehenden Durchstoßen der Siegelfolie 8 wird die Wasserpermeation über den Hauptpermeationsweg, nämlich über die Pappeinlage 6 sowie das Material, aus dem der Verschluss 4 gefertigt ist, durch die zusätzliche Folie 10 vollständig blockiert.

Die In-Use-Permeationsrate von ursprünglich ca. 7,3 mg/d ist unter den zuvor erläuterten Bedingungen bei der erfindungsgemäßen Kunststoffflasche 1 auf ca. 2,35mg/d verringert.

## Patentansprüche

1. Induktionssiegelscheibe für einen Verschluss (4) einer Flasche zur Aufbewahrung von Arzneimitteln, umfassend eine elastische Druckeinlage (9) und eine insbesondere metallische Siegelfolie (8), wobei zwischen der Druckeinlage (9) und der Siegelfolie (8) eine Folie (10) mit einer geringen Permeabilität angeordnet ist, wobei zwischen der Folie (10) und der Siegelfolie (8) eine Haftschicht vorgesehen ist, **dadurch gekennzeichnet, dass** die Fläche der haftschicht geringer als die Fläche der Siegelfolie (8) bemessen ist, wobei sich die Haftschicht nicht bis zum Rand der Siegelfolie (8) erstreckt.

2. Induktionssiegelscheibe nach Anspruch 1, **dadurch gekennzeichnen,** dass die Folie (10) mit der als Pappeinlage (6) ausgebildeten Druckeinlage (9) verklebt ist.

3. Induktionssiegelscheibe nach Anspruch 1 oder 2, **dadurch gekennzeichnet, dass** die Siegelfolie (8) und die Folie (10) aus Aluminium bestehen.

4. Induktionssiegelscheibe nach einem der Ansprüche 2 bis 3, **dadurch gekennzeichnet, dass** die Fläche der Pappeinlage (6), der Folie (10) und der Siegelfolie (8) jeweils die gleiche Größe aufweisen.

5. Induktionssiegelscheibe nach einem der Ansprüche 1 bis 4, **dadurch gekennzeichnet, dass** die Haftschicht aus einem Wachs (7), insbesondere mit einer geringen Permeabilität, besteht.

6. Induktionssiegelscheibe nach einem der Ansprüche 1 bis 3, **dadurch gekennzeichnet, dass** die Siegelfolie (8) oder der Verschluss (4) derart bemessen ist, dass die Siegelfolie (8) im ungesiegelten Zustand in dem Verschluss (4) gehalten ist.

7. Induktionssiegelscheibe nach einem der Ansprüche 1 bis 5, **dadurch gekennzeichnet, dass** die Folie (10) und/oder die Siegelfolie (8) beschichtet sind, insbesondere mit einem Lack oder einem Kunststoff, beispielsweise Polyolefin, Polyethylen, Polypropylen, Ethylenvinylalcohol, Ethylenvinylacetat, oder einer Barrierefolie, beispielsweise Cycloolefincopolymer, hochkritsallines Polyvinylidenchlorid, Polychlortrifluorethylen.

8. Induktionssiegelscheibe nach Anspruch 7, **dadurch gekennzeichnet, dass** die Beschichtung ein Sorbens umfasst, das insbesondere zur Sorption von Wasser, Gasen und/oder Aromastoffen geeignet ist.

9. Verschluss für eine Flasche zur Aufbewahrung von Arzneimitteln mit einer Induktionssiegelscheibe (5) nach Anspruch 1.

10. Verschluss nach Anspruch 9, **dadurch gekennzeichnet, dass** der Verschluss (4) als Schraubverschluss ausgebildet ist.

11. Kunststoffflasche mit einem Verschluss (4) nach Anspruch 9.

12. Kunststoffflasche nach Anspruch 10, **dadurch gekennzeichnet, dass** an dem freien Ende des Flaschenhalses (2) eine Dichtfläche ausgebildet ist.

13. Kunststoffflasche nach Anspruch 10, **dadurch gekennzeichnet, dass** die Kunststoffflasche (1) mit einer pharmazeutischen Wirkstoffformulierung in Form von Tabletten, Dragees oder befüllten Kapseln befüllt ist.

## Claims

1. Induction seal disc for a closure (4) of a bottle for storing medicaments, comprising an elastic pressure inlay (9) and an, in particular, metallic sealing foil (8), wherein a low permeability film (10) is arranged between the pressure inlay (9) and the sealing foil (8), and wherein an adhesive layer is provided between the film (10) and the sealing foil (8), **characterised in that** the area of the sealing layer is smaller than the area of the sealing foil (8), and wherein the adhesive layer does not extend to the edge of the sealing foil (8).

2. Induction seal disc according to claim 1, **characterised in that** the film (10) is adhesively bonded to the pressure inlay (9) embodied as a cardboard inlay (6).

3. Induction seal disc according to claim 1 or 2, **characterised in that** the sealing foil (8) and the film (10) are made of aluminium.

4. Induction seal disc according to one of claims 2 and 3, **characterised in that** the surface of the cardboard inlay (6), the film (10) and the sealing foil (8) are all the same size.

5. Induction seal disc according to one of claims 1 to 4, **characterised in that** the adhesive layer consists of a wax (7), particularly with a low permeability.

6. Induction seal disc according to one of claims 1 to 3, **characterised in that** the sealing foil (8) or the closure (4) is of such dimensions that the sealing foil (8) is held in the closure (4), in the unsealed state.

7. Induction seal disc according to one of claims 1 to 5, **characterised in that** the film (10) and/or the sealing foil (8) is or are coated, particularly with a lacquer or a plastic, for example polyolefin, polyethylene, polypropylene, ethylenevinyl alcohol, ethylenevinyl acetate, or a barrier foil, for example cycloolefin copolymer, highly crystalline polyvinylidene chloride, polychlorotrifluoroethylene.

8. Induction seal disc according to claim 7, **characterised in that** the coating comprises a sorbent which is suitable in particular for absorbing water, gases and/or flavours.

9. Closure for a bottle for storing medicaments, having an induction seal disc (5) according to claim 1.

10. Closure according to claim 9, **characterised in that** the closure (4) is embodied as a screw closure.

11. Plastic bottle having a closure (4) according to claim 9.

12. Plastic bottle according to claim 10, **characterised in that** a sealing surface is formed at the free end of the bottle neck (2).

13. Plastic bottle according to claim 10, **characterised in that** the plastic bottle (1) is filled with a pharmaceutical active substance formulation in the form of plain or coated tablets or filled capsules.

## Revendications

1. Rondelle de scellage par induction pour un bouchon (4) d'une bouteille servant à contenir des médicaments, comprenant un insert de pression (9) élastique et une pellicule de scellage (8) en particulier métallique, une pellicule (10) présentant une faible perméabilité étant disposée entre l'insert de pression (9) et la pellicule de scellage (8), une couche adhésive étant prévue entre la pellicule (10) et la pellicule de scellage (8), **caractérisée en ce que** la surface de la couche adhésive présente des dimensions inférieures à la surface de la pellicule de scellage (8), la couche adhésive ne s'étendant pas jusqu'au bord de la pellicule de scellage (8).

2. Rondelle de scellage par induction selon la revendication 1, **caractérisée en ce que** la pellicule (10) est collée à l'insert de pression (9) réalisé sous la forme d'un insert en carton (6).

3. Rondelle de scellage par induction selon la revendication 1 ou 2, **caractérisée en ce que** la pellicule de scellage (8) et la pellicule (10) sont constituées d'aluminium.

4. Rondelle de scellage par induction selon l'une quelconque des revendications 2 à 3, **caractérisée en ce que** la surface de l'insert en carton (6), de la pellicule (10) et de la pellicule de scellage (8) présentent respectivement la même dimension.

5. Rondelle de scellage par induction selon l'une quelconque des revendications 1 à 4, **caractérisée en ce que** la couche adhésive est constituée d'une cire (7), en particulier présentant une faible perméabilité.

6. Rondelle de scellage par induction selon l'une quelconque des revendications 1 à 3, **caractérisée en ce que** la pellicule de scellage (8) ou le bouchon (4) présentent des dimensions telles que la pellicule de scellage (8) est maintenue, dans l'état non scellé, dans le bouchon (4).

7. Rondelle de scellage par induction selon l'une quelconque des revendications 1 à 5, **caractérisée en ce que** la pellicule (10) et/ou la pellicule de scellage (8) sont revêtues, en particulier d'un vernis ou d'une matière plastique, par exemple une polyoléfine, un polyéthylène, un polypropylène, un éthylène-alcool vinylique, un éthylène-acétate de vinyle, ou d'une pellicule formant barrière, en particulier un copolymère de cyclooléfine, un polychlorure de vinylidène hautement cristallin, un polychlorotrifluoroéthylène.

8. Rondelle de scellage par induction selon la revendication 7, **caractérisée en ce que** le revêtement comprend un sorbant, qui convient en particulier aux fins de la sorption d'eau, de gaz et/ou de substances aromatiques.

9. Bouchon pour une bouteille servant à contenir des médicaments comprenant une rondelle de scellage par induction (5) selon la revendication 1.

10. Bouchon selon la revendication 9, **caractérisé en ce que** le bouchon (4) est réalisé sous la forme d'un bouchon à visser.

11. Bouteille en matière plastique comprenant un bouchon (4) selon la revendication 9.

12. Bouteille en matière plastique selon la revendication 10, **caractérisée en ce qu'**une surface étanche est réalisée au niveau de l'extrémité libre du goulot de bouteille (2).

13. Bouteille en matière plastique selon la revendication 10, **caractérisée en ce que** la bouteille en matière plastique (1) est remplie d'une composition pharmaceutique de principes actifs se présentant sous la forme de comprimés, de dragées ou de capsules remplies.
